# EUROPÄISCHE PATENTSCHRIFT

(11) **EP 2 980 425 B1**
(45) Veröffentlichungstag und Bekanntmachung des Hinweises auf die Patenterteilung: **24.05.2017**
(21) Anmeldenummer: 15174328.3
(22) Anmeldetag: 29.06.2015
(51) Int. Cl.: F16B 37/04

(54) **BEFESTIGUNGSANORDNUNG FÜR C-FÖRMIGE HALTESCHIENEN UND BAUSATZ**
FASTENING ASSEMBLY FOR C-SHAPED ATTACHMENT STRIPS AND KIT
AGENCEMENT DE FIXATION POUR RAILS DE RETENUE EN FORME DE C ET KIT

(30) Priorität: 29.07.2014 DE 102014214853
(43) Veröffentlichungstag der Anmeldung: 03.02.2016
(73) Patentinhaber: Adolf Würth GmbH & Co. KG, 74653 Künzelsau (DE); Würth International AG, 7000 Chur (CH); Profilanker GmbH, 58840 Plettenberg (DE)
(72) Erfinder: Sailer, Thomas, 74196 Neuenstadt (DE); Pielka, Miroslav, 58840 Plettenberg (DE)
(74) Vertreter: Patentanwälte Ruff, Wilhelm, Beier, Dauster & Partner mbB

(56) Entgegenhaltungen:
- WO-A1-2007/008060
- US-A- 4 460 299
- US-A1- 2009 087 282

## Beschreibung

Die Erfindung betrifft eine Befestigungsanordnung für C-förmige Halteschienen mit einer Schraube und einer Schiebemutter, wobei ein Gewindeabschnitt der Schraube wenigstens abschnittsweise in eine Gewindebohrung der Schiebemutter eingeschraubt ist, einer zwischen einem Schraubenkopf der Schraube und der Schiebemutter angeordneten Haltescheibe und einem zwischen der Haltescheibe und der Schiebemutter angeordneten Positionierbauteil. Die Erfindung betrifft auch einen Bausatz mit wenigstens einer erfindungsgemäßen Befestigungsanordnung, wenigstens einer C-förmigen Halteschiene und wenigstens einem Montagewinkel.

Aus der deutschen Patentschrift DE 199 12 474 C2 ist eine Befestigungsanordnung für C-förmige Halteschienen bekannt, die eine Schraube, eine Schiebemutter sowie eine zwischen der Schraube und der Schiebemutter angeordnete Haltescheibe aufweist. Zwischen der Haltescheibe und der Schiebemutter ist ein Vorspannbauteil angeordnet, das zwei Kunststoffteile und eine zwischen den Kunststoffteilen angeordnete Schraubenfeder aufweist. Die beiden Kunststoffteile sind ineinander teleskopierbar und sorgen dafür, dass die Schiebemutter in einer festen Position zur Haltescheibe gehalten wird, und dadurch nach dem Einsetzen in die C-förmige Halteschiene zusammen mit der Haltescheibe um 90° verdreht werden kann.

Aus der europäischen Offenlegungsschrift EP 1 201 941 A2 ist eine weitere Befestigungsanordnung für C-förmige Halteschienen mit einer Schraube und einer Schiebemutter bekannt. Zwischen einem Kopf der Schraube und der Schiebemutter ist eine Haltescheibe angeordnet. Eine Tellerfeder oder Schraubenfeder zwischen dem Kopf der Schraube und der Haltescheibe drückt die Haltescheibe und den Schraubenkopf auseinander und zieht dadurch die Schiebemutter in eine Anlageposition an die Haltescheibe. Zum Einsetzen der Befestigungsanordnung in eine C-förmige Halteschiene wird die Schraube relativ zur Haltescheibe nach unten gedrückt, so dass dann die Schraube zusammen mit der Schiebemutter um 90° verdreht werden kann. Nach dieser Verdrehung zieht die Feder die Schiebemutter wieder in Richtung der Haltescheibe und eine zwischen Haltescheibe und Schiebemutter vorgesehene Kupplung schnappt ein. In dieser Position kann die Schraube dann relativ zur Schiebemutter verdreht werden und die Befestigungsanordnung kann festgeschraubt werden.

Aus der US-Patentschrift US 4,460,299 ist eine Befestigungsanordnung für C-förmige Halteschienen bekannt, die eine Schraube und eine Schiebemutter aufweist, wobei ein Gewindeabschnitt der Schraube wenigstens abschnittsweise in eine Gewindebohrung der Schiebemutter eingeschraubt ist. Zwischen einem Schraubenkopf der Schraube und der Schiebemutter ist eine Haltescheibe angeordnet. Zwischen der Haltescheibe und der Schiebemutter ist ein Positionierbauteil angeordnet. Das Positionierbauteil weist einen Abstandshalterabschnitt auf und auch einen Vorspannabschnitt, der an einer dem Schraubenkopf abgewandten Unterseite der Schiebemutter angreift. Mittels des Positionierbauteils wird die Haltescheibe in konstantem Abstand von der Schiebemutter gehalten. Der Vorspannabschnitt ist in Form von Federhaken ausgeführt, die an der Unterseite der Schiebemutter angreifen. An seinem, der Haltescheibe zugewandten Ende weist das Positionierbauteil einen ringförmigen Flansch auf, auf dem die Haltescheibe lose aufliegt.

Aus der US-Offenlegungsschrift US 2009/0087282 ist eine ähnliche Befestigungsanordnung für C-förmige Halteschienen bekannt. Ein Positionierbauteil weist wieder Haken auf, die zum Halten einer Schiebemutter vorgesehen sind. Eine Haltescheibe wird auf einer passend ausgebildeten Auflagefläche des Positionierbauteils gehalten.

Aus der internationalen Offenlegungsschrift WO 2007/008060 A1 ist eine weitere Befestigungsanordnung für C-förmige Halteschienen bekannt. Das Positionierbauteil umgreift dort die Schiebemutter und weist auch ein Vorspannbauteil auf, um die Schiebemutter zuverlässig in Position zu halten. Eine Haltescheibe wird mittels zweier Rasthaken des Positionierbauteils in Position gehalten, wobei die Rasthaken in speziell eingerichtete Ausnehmungen der Haltescheibe eingreifen.

Mit der Erfindung soll eine einfach herzustellende Befestigungsanordnung für C-förmige Halteschienen bereitgestellt werden.

Erfindungsgemäß ist hierzu eine Befestigungsanordnung für C-förmige Halteschienen mit den Merkmalen von Anspruch 1 vorgesehen. Vorteilhafte Ausgestaltungen der Erfindung sind in den Unteransprüchen angegeben. Es ist eine Befestigungsanordnung mit einer Schraube und einer Schiebemutter vorgesehen, wobei ein Gewindeabschnitt der Schraube wenigstens abschnittsweise in eine Gewindebohrung der Schiebemutter eingeschraubt ist, wobei eine zwischen einem Schraubenkopf der Schraube und der Schiebemutter angeordnete Haltescheibe und ein Positionierbauteil vorgesehen sind, bei der das Positionierbauteil einen zwischen der Haltescheibe und der Schiebemutter angeordneten Abstandshalterabschnitt und einen, an einer dem Schraubenkopf abgewandten Unterseite der Schiebemutter angreifenden Vorspannabschnitt aufweist.

Durch Vorsehen eines Halteabschnitts, mit dem die Haltescheibe und die Schiebemutter in konstantem Abstand zueinander gehalten werden können, sowie eines Vorspannabschnitts, der den Halteabschnitt des Positionierbauteils in Anlage an die Oberseite der Schiebemutter zieht, lässt sich eine überraschend einfach herstellbare und dabei sämtliche geforderte Funktionen erfüllende Befestigungsanordnung bereitstellen. Speziell umgreift das Positionierbauteil die Schiebemutter und greift an der Unterseite der Schiebemutter an. Dadurch kann das Positionierbauteil sehr einfach ausgebildet werden und dennoch ist sichergestellt, dass die Haltescheibe und die Schiebemutter im Ruhezustand einen konstanten Abstand zueinander aufweisen und dann durch Eindrücken des Schraubenkopfes voneinander wegbewegt werden können, um die Schiebemutter dann innerhalb der C-förmigen Halteschiene um 90° verdrehen zu können.

Der Abstandshalterabschnitt weist an seinem, dem Schraubenkopf zugewandten Ende eine Aufnahme für die Haltescheibe auf. Auf diese Weise wird nicht nur das insbesondere vollautomatisch erfolgende Zusammenbauen der Befestigungsanordnung erleichtert, die Haltescheibe wird dadurch auch zuverlässig in der für sie vorgesehenen Position gehalten.

Die Aufnahme weist zwei Kreisringabschnitte auf, die zwischen einem Schaft und einer Innenwand einer Durchgangsbohrung der Haltescheibe angeordnet sind.

Auf diese Weise kann das Positionierbauteil in einfacher Weise mit der Haltescheibe verbunden werden, indem die beiden Kreisringabschnitte aufeinander zu gedrückt und dann in die Durchgangsbohrung der Haltescheibe eingeführt werden. Zweckmäßigerweise ist das Positionierbauteil leicht federnd ausgebildet, so dass die beiden Kreisringabschnitte nach dem Zusammendrücken wieder auffedern und dadurch an der Durchgangsöffnung der Haltescheibe angreifen.

In Weiterbildung der Erfindung sind der Abstandshalterabschnitt und der Vorspannabschnitt mittels zweier Stege verbunden, die an insbesondere gegenüberliegenden Längsseiten der Schiebemutter anliegen.

Mittels solcher Stege kann die Schiebemutter in sehr einfacher Weise abschnittsweise umgriffen werden und der Vorspannabschnitt kann gegenüberliegend der Unterseite der Schiebemutter angeordnet werden. Die Unterseite der Schiebemutter ist dabei die dem Schraubenkopf abgewandte Seite, die Oberseite der Schiebemutter die dem Schraubenkopf zugewandte Seite. Die Oberseite der Schiebemutter kann mit einer Einprägung versehen sein, die passend zu Einprägungen an der C-förmigen Halteschiene ausgebildet ist, um im festgeschraubten Zustand einen zusätzlichen Formschluss zwischen Schiebemutter und C-förmiger Halteschiene zu bewirken.

In Weiterbildung der Erfindung weist die Aufnahme Mittel auf, um die Haltescheibe relativ zu einer Längsrichtung der Schraube zu fixieren, aber eine Drehung der Haltescheibe relativ zum Positionierbauteil zu ermöglichen.

Auf diese Weise wird das Anbringen der Befestigungsanordnung an einer C-förmigen Halteschiene sehr erleichtert. Denn die Haltescheibe kann sich frei drehen, um in eventuell vorgesehene Ausnehmungen an einem Montagewinkel sowie auch in die C-förmige Halteschiene selbst eingreifen zu können. Auf der anderen Seite wird ein Abstand zwischen Schiebemutter und Haltescheibe konstant gehalten, bis nach dem Einsetzen der Befestigungsanordnung in die C-förmige Halteschiene der Schraubenkopf in Richtung auf die C-förmige Halteschiene gedrückt, dadurch die Schiebemutter von der Haltescheibe wegbewegt und die Schiebemutter dann um 90° verdreht wird. Beispielsweise sind die Mittel an der Aufnahme als Rasteinrichtung ausgebildet. Es können zwei Kreisringabschnitte vorgesehen sein, die an ihrem oberen, sich in Richtung auf den Schraubenkopf zu erstreckenden Ende einen sich radial nach außen erstreckenden Vorsprung haben, der einen Hinterschnitt bildet und dann an einer Oberseite der Haltescheibe angreift, die in die Durchgangsöffnung übergeht. Die Oberseite der Haltescheibe kann beispielsweise auch mit einer kreisringförmigen Vertiefung versehen sein, die dann in die Durchgangsöffnung übergeht. Diese Vertiefung dient zur Anordnung der sich radial nach außen erstreckenden Vorsprünge des Positionierbauteils.

In Weiterbildung der Erfindung weist der Halteabschnitt zwei Halbschalen auf, die einen Schaft der Schraube zwischen sich aufnehmen und voneinander beabstandet sind. Durch die Beabstandung der beiden Halbschalen können diese zusammengedrückt werden, um das Positionierbauteil abschnittsweise in die Durchgangsöffnung der Haltescheibe einzuführen. Auch kann die korrekte Anordnung des Schafts der Schraube durch die Beabstandung der beiden Halbschalen voneinander in einfacher Weise überprüft werden.

In Weiterbildung der Erfindung sind die beiden Halbschalen im Bereich zweier Stege miteinander verbunden, die an insbesondere gegenüberliegenden Längsseiten der Schiebemutter anliegen.

Solche Stege verursachen in der Querrichtung eine nur geringfügig größere Breite der Befestigungsanordnung, die natürlich so bemessen sein muss, dass sich die Schiebemutter mit den an gegenüberliegenden Längsseiten der Schiebemutter anliegenden Stegen problemlos in die C-förmige Halteschiene einführen lässt. Die Stege ermöglichen es aber, einen Vorspannabschnitt gegenüberliegend einer Unterseite der Schiebemutter anzuordnen und dadurch einen sehr einfachen Aufbau des Positionierbauteils zu ermöglichen.

In Weiterbildung der Erfindung weisen die Stege jeweils einen Einschnitt auf, der insbesondere V-förmig ist, wobei der Einschnitt bis zum Schaft der Schraube durchgeht und sich bis zu dem, dem Schraubenkopf zugewandten Ende des Positionierbauteils fortsetzt. Mittels eines solchen insbesondere V-förmigen Einschnitts lässt sich eine Federwirkung in radialer Richtung des Positionierbauteils in einfacher Weise erreichen.

In Weiterbildung der Erfindung weist der Vorspannabschnitt einen Haltebügel auf, der die zwei Stege miteinander verbindet. Durch einen solchen Haltebügel kann die Schiebemutter zuverlässig zwischen den beiden Stegen gehalten werden, auch wenn diese eine sehr geringe Materialstärke aufweisen. Dies ist beim Zusammenbau der Befestigungsanordnung wichtig. Der Haltebügel ermöglicht auch die Anordnung einer Feder, die sich dann an der Unterseite der Schiebemutter abstützt.

In Weiterbildung der Erfindung weist der Vorspannabschnitt wenigstens eine Blattfeder auf, die sich einerseits an einem Haltebügel des Positionierbauteils, der die zwei Stege miteinander verbindet, die an gegenüberliegenden Längsseiten der Schiebemutter anliegen, und andererseits an einer, dem Kopf der Schraube abgewandten Unterseite der Schiebemutter abstützt. Die erfindungsgemäße Befestigungsanordnung erlaubt die Verwendung einer Blattfeder, da der Vorspannabschnitt relativ zum Kopf der Schraube gesehen unterhalb der Schiebemutter angeordnet ist. Blattfedern lassen sich in sehr einfacher Weise herstellen, beispielsweise als Kunststoffspritzgussteil. Die Blattfeder kann als vom Haltebügel separates Bauteil ausgeführt sein, alternativ ist die Blattfeder einstückig mit dem Positionierbauteil ausgebildet.

In Weiterbildung der Erfindung stützt sich die Blattfeder mit zwei freien Enden an einer Unterseite der Schiebemutter und mit einem Mittelteil an einer der Schiebemutter zugewandten Oberseite des Haltebügels ab.

Auf diese Weise lässt sich eine zuverlässige Vorspannwirkung erreichen und die erfindungsgemäße Befestigungsanordnung ist einfach herstellbar und insbesondere einfach vollautomatisch zusammenbaubar.

In Weiterbildung der Erfindung sind der Mittelteil der Blattfeder und die Oberseite des Haltebügels mit zueinander passenden Rastvorrichtungen versehen.

Auf diese Weise kann die Position der Blattfeder relativ zum Haltebügel in einfacher Weise festgelegt werden. Der Haltebügel und die Blattfeder haben dabei vorteilhafterweise eine Durchgangsöffnung für den Schaft der Schraube.

In Weiterbildung der Erfindung ist das Positionierbauteil aus einem Kunststoffmaterial hergestellt.

Beispielsweise ist das Positionierbauteil in kostengünstiger Weise als Kunststoffspritzgussteil herstellbar. Der verwendete Kunststoff sollte dabei vorteilhafterweise eine gewisse Federwirkung des Positionierbauteils ermöglichen und infolgedessen elastisch sein und/oder das Positionierbauteil weist aufgrund seiner Form eine gewisse Elastizität auf.

In Weiterbildung der Erfindung ist die Blattfeder als vom Rest des Positionierbauteils separates Kunststoffteil ausgebildet.

Das Positionierbauteil kann dadurch aus zwei separaten, jeweils geringe räumliche Abmessungen aufweisenden Bauteilen hergestellt werden. Falls erforderlich, kann die Blattfeder aus einem anderen Kunststoffmaterial als der Rest des Positionierbauteils hergestellt werden, um eine ausreichende Federwirkung zu erzielen.

In Weiterbildung der Erfindung ist vor Verwendung der Befestigungsanordnung der Gewindeabschnitt der Schraube in die Gewindebohrung der Schiebemutter eingeklebt.

Dadurch wird eine zusätzliche Sicherheit dafür geschaffen, dass sich die Schiebemutter problemlos zusammen mit der Schraube um 90° verdrehen lässt, nachdem sie in die C-förmige Halteschiene eingesetzt ist.

Die Erfindung betrifft auch einen Bausatz mit wenigstens einer erfindungsgemäßen Befestigungsanordnung, wenigstens einer C-förmigen Halteschiene und wenigstens einem Montagewinkel, wobei der Montagewinkel wenigstens eine Durchgangsöffnung aufweist, die auf die Abmessungen der Haltescheibe so abgestimmt ist, dass sich zwei, vom Kopf der Schraube weg abgekröpfte Sicherungsabschnitte der Haltescheibe durch die Durchgangsöffnung hindurch erstrecken können und dass zwei Haltevorsprünge der Haltescheibe auf einer, dem Kopf der Schraube zugewandten Oberseite des Montagewinkels aufliegen können.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine isometrische Darstellung einer erfindungsgemäßen Befestigungsanordnung von schräg oben,
- Fig. 2: eine Vorderansicht der Befestigungsanordnung der Fig. 1,
- Fig. 3: eine Seitenansicht der Befestigungsanordnung der Fig. 1,
- Fig. 4: eine Draufsicht auf die Befestigungsanordnung der Fig. 1,
- Fig. 5: eine Ansicht der Befestigungsanordnung der Fig. 1 von unten,
- Fig. 6: einen Bausatz mit vier erfindungsgemäßen Befestigungsanordnungen, zwei C-förmigen Halteschienen und einem Montagewinkel in auseinandergezogener Darstellung und
- Fig. 7: den Bausatz der Fig. 6 im zusammengebauten Zustand.

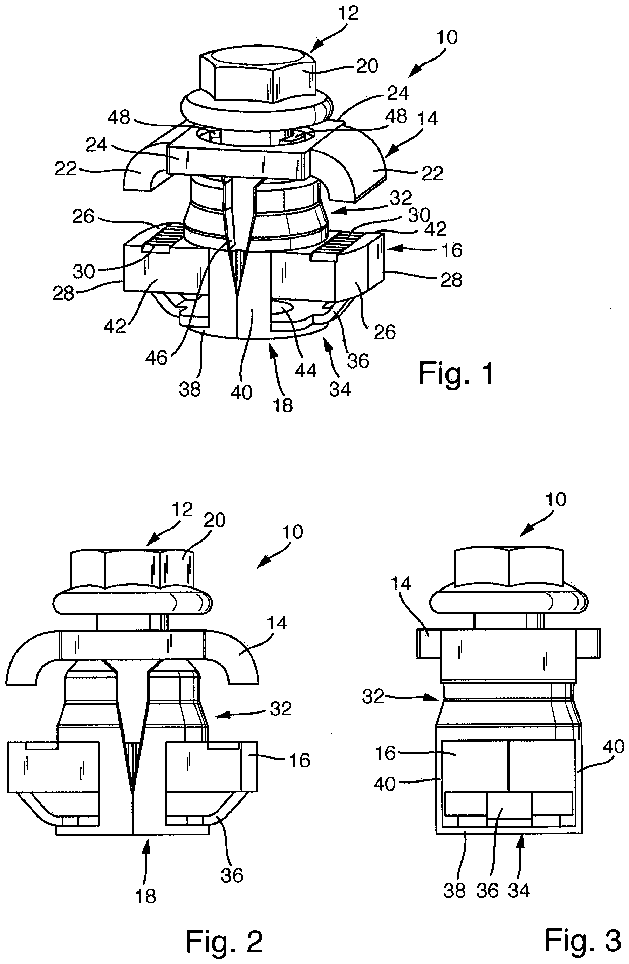

Die Darstellung der Fig. 1 zeigt eine erfindungsgemäße Befestigungsanordnung 10 mit einer Schraube 12, einer Haltescheibe 14, einer Schiebemutter 16 und einem Positionierbauteil 18. Die Schraube 12 weist einen Schraubenkopf 20 auf, der mit einer Antriebsausbildung in Form eines Sechskants versehen ist. Darüber hinaus weist der Schraubenkopf 20 einen Flansch auf, der zur Anlage an einer Oberseite der Haltescheibe 14 vorgesehen ist.

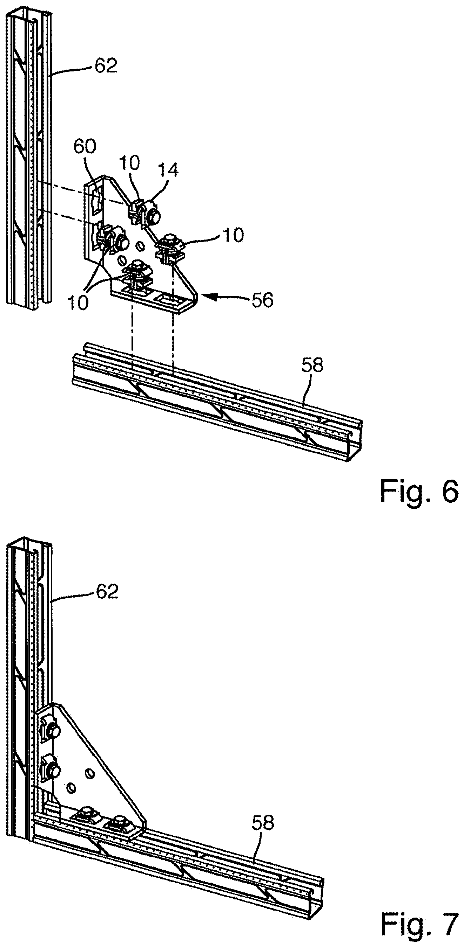

Die Haltescheibe 14 weist zwei vom Kopf 20 der Schraube 12 weg abgekröpfte Sicherungsabschnitte 22 auf. Diese Sicherungsabschnitte 22 sind dafür vorgesehen, siehe Fig. 6, in passende Ausnehmungen in einem Montagewinkel einzugreifen und dadurch sicherzustellen, dass die Haltescheibe 14 relativ zum Montagewinkel nicht mehr verdreht werden kann. Die Haltescheibe 14 weist darüber hinaus zwei Haltevorsprünge 24 auf, die dann, siehe wieder Fig. 6, auf einer Oberseite des Montagewinkels aufliegen können und letztendlich die Vorspannkraft der Schraube 12 auf den Montagewinkel übertragen.

Die Schiebemutter 16 ist plattenförmig ausgebildet und weist zwei diagonal gegenüberliegende abgerundete Ecken 26 auf. Diese diagonal gegenüberliegenden abgerundeten Ecken sind auf die Innenabmessungen der C-förmigen Halteschienen, siehe Fig. 6, abgestimmt. Wenn die Schiebemutter 16 sich innerhalb einer C-förmigen Halteschiene befindet, so kann sie ausgehend vom Zustand der Fig. 1 im Uhrzeigersinn innerhalb der Halteschiene verdreht werden. In der Gegenrichtung, in Fig. 1 also entgegen dem Uhrzeigersinn, ist eine Verdrehung dahingegen nicht möglich, da die anderen beiden Ecken 28 der Schiebemutter nicht abgerundet sind und beim Versuch des Verdrehens an die Seitenwände der C-förmigen Halteschiene anstoßen. An ihrer, dem Schraubenkopf 20 zugewandten Oberseite weist die Schiebemutter 16 zwei bandartig verlaufende Einprägungen 30 auf. Die Einprägungen 30 sind passend zu Einprägungen an den C-förmigen Halteschienen ausgebildet und sorgen im festgeschraubten Zustand der Befestigungsanordnung 12 für einen zusätzlichen Formschluss zwischen der Schiebemutter 16 und der C-förmigen Halteschiene.

Das Positionierbauteil 18 weist einen Abstandshalterabschnitt 32 auf, der sich einerseits auf einer Oberseite der Schiebemutter 16 und andererseits an einer Unterseite der Haltescheibe 14 abstützt. Dieser Abstandshalterabschnitt 32 ist dafür vorgesehen, die Schiebemutter 16 und die Haltescheibe 14 in dem Zustand der Fig. 1 in konstantem Abstand zueinander zu halten. Der Abstand von Schiebemutter 16 und Haltescheibe 14 kann aber durch Eindrücken des Kopfs 20 der Schraube 12 vergrößert werden, was nachfolgend noch beschrieben wird.

Darüber hinaus weist das Positionierbauteil 18 einen Vorspannabschnitt 34 auf, der den Ab-standshalterabschnitt 32 des Positionierbauteils 18 gegen die Oberseite der Schiebemutter 16 vorspannt. Dies wird bei der dargestellten Ausführungsform dadurch bewirkt, dass eine Blattfeder 36 vorgesehen ist, die sich einerseits an einer Unterseite der Schiebemutter 16 und andererseits an einem Haltebügel 38 des Positionierbauteils 18 abstützt, wobei der Haltebügel 38 gegenüberliegend einer Unterseite der Schiebemutter 16 angeordnet ist. Der Haltebügel 38 verbindet wiederum zwei Stege 40 miteinander, die an gegenüberliegenden Längsseiten 42 der Schiebemutter 16 anliegen und dadurch den Abstandshalterabschnitt 28 mit dem Vorspannabschnitt 34 verbinden.

Wie in Fig. 1 zu erkennen ist, stützt sich die Blattfeder 36 mit zwei freien Enden an einer Unterseite der Schiebemutter 16 ab und ein Mittelteil der Blattfeder 36 stützt sich wiederum auf einer Oberseite des Haltebügels 38 ab. Sowohl die Blattfeder 36 als auch der Haltebügel 38 sind mit einer Durchgangsöffnung 44 versehen, die fluchtend zum Schaft der Schraube 12 angeordnet ist und durch die sich im vollständig eingeschraubten Zustand der Schaft der Schraube hindurch erstrecken kann.

Die Stege 40 weisen jeweils einen V-förmigen Einschnitt 46 auf, der sich bis zu einem dem Schraubenkopf 20 zugewandten Ende des Positionierbauteils 18 erstreckt. Diese Einschnitte 46 führen dazu, dass der Abstandshalterabschnitt 32 des Positionierbauteils aus zwei voneinander beabstandeten Halbschalen besteht. Diese beiden Halbschalen umgeben den Schaft der Schraube 12 jeweils abschnittsweise und lassen sich vor dem Einführen der Schraube 12 in radialer Richtung zusammendrücken. Die beiden Halbschalen des Abstandshalterabschnitts 32 werden zusammengedrückt, um eine Aufnahme am oberen Ende des Abstandshalterabschnitts 32 in die Durchgangsöffnung der Haltescheibe 14 einschieben zu können. Die Aufnahme besteht dabei aus zwei Kreisringabschnitten, die an den Innendurchmesser der Durchgangsöffnung in der Haltescheibe 14 angepasst sind. Darüber hinaus weist die Aufnahme zwei sich in radialer Richtung nach außen erstreckende Vorsprünge 48 auf, die auf einer Oberseite der Haltescheibe 14 anliegen. Der Abstandshalterabschnitt 32 fixiert die Haltescheibe 14 mittels der Vorsprünge 48 in axialer Richtung, also parallel zum Schaft der Schraube 12. Die Haltescheibe 14 lässt sich jedoch relativ zum Abstandshalterabschnitt 32 um die Mittellängsachse der Schraube 12 verdrehen.

Die Darstellung der Fig. 2 zeigt eine Seitenansicht der Befestigungsanordnung 10 der Fig. 1. Zu erkennen ist die Ausbildung der Blattfeder mit einem ebenen Mittelteil und zwei, in Richtung auf die Unterseite der Schiebemutter 16 hin abgebogenen freien Enden. Die Blattfeder 36 zieht das Positionierbauteil 18 nach unten, bis eine Unterseite des Abstandshalterabschnitts 32 auf einer Oberseite der Schiebemutter 16 anliegt. Wird nun der Kopf 20 der Schraube 12 ausgehend von der in Fig. 2 dargestellten Position nach unten gedrückt, wobei die Haltescheibe 14 aber festgehalten wird, so erfolgt diese Bewegung der Schraube 12 nach unten gegen die Vorspannkraft der Blattfeder 36. Da der Schaft der Schraube 12 abschnittsweise in die Schiebemutter 16 eingeschraubt ist, bewegt sich die Schiebemutter 16 zusammen mit der Schraube 12 nach unten. Der Haltebügel 38 des Positionierbauteils 18 stützt die Blattfeder 36 ab und bleibt relativ zur Haltescheibe 14 in Ruhe. Dies deshalb, da die Vorsprünge 48 auf der Oberseite der Haltescheibe 14 aufliegen und dadurch eine Bewegung des Positionierbauteils 18 nach unten verhindern, wenn die Schraube 12 nach unten gedrückt wird. Nach dem Einsetzen der Befestigungsanordnung 10 in eine Durchgangsöffnung eines Montagewinkels, siehe Fig. 6, wird der Schraubenkopf 12 nach unten gedrückt. Dadurch wird die Schiebemutter 16 so weit in das Innere der C-förmigen Halteschiene bewegt, dass sie relativ zur Halteschiene um 90° verdreht werden und dadurch die Hinterschnitte der C-förmigen Halteschiene hintergreifen kann.

Die Darstellung der Fig. 3 zeigt eine weitere Seitenansicht der Befestigungsanordnung 10 der Fig. 1, wobei die Seitenansicht der Fig. 3 gegenüber der Seitenansicht der Fig. 2 um 90° gedreht ist. In dieser Ansicht ist gut zu erkennen, wie die beiden Stege 40 an den gegenüberliegenden Längsseiten der Schiebemutter 16 anliegen und dadurch den Abstandshalterabschnitt 32 zwischen Haltescheibe 14 und Schiebemutter 16 mit dem unterhalb der Schiebemutter 16 angeordneten Vorspannabschnitt 34 verbinden. Die beiden Stege 40 sind wiederum mittels des Haltebügels 38 miteinander verbunden. Die beiden Stege 40, die Unterseite des Abstandshalterabschnitts 32 und der Haltebügel 38 definieren dadurch eine im Querschnitt rechteckige Durchgangsöffnung, in die sowohl die Schiebemutter 16 als auch die Blattfeder 36 eingeschoben werden können.

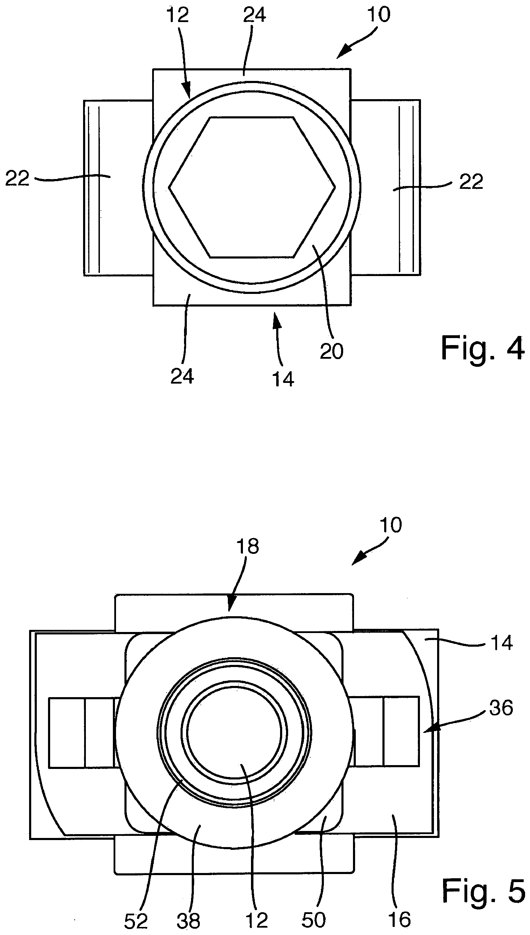

Die Darstellung der Fig. 4 zeigt die Befestigungsanordnung 10 der Fig. 1 von oben. In dieser Ansicht sind lediglich der Kopf 20 der Schraube 12 sowie die Haltescheibe 14 zu erkennen. Die Haltescheibe 14 weist, wie erläutert wurde, die beiden an entgegengesetzten Seiten der Haltescheibe 14 angeordneten Sicherungsabschnitte 22 und die ebenfalls an gegenüberliegenden Seiten der Haltescheibe 14 angeordneten Klemmabschnitte 24 auf.

Die Darstellung der Fig. 5 zeigt die Befestigungsanordnung 10 der Fig. 1 von unten. Zu erkennen ist der Schaft der Schraube 12, der abschnittsweise in die Schiebemutter 16 eingeschraubt ist. Lediglich abschnittsweise zu erkennen ist die Haltescheibe 14. Der Haltebügel 38 des Positionierbauteils 18 ist mit einer mittigen Durchgangsöffnung versehen. Eine Durchgangsöffnung im Mittelteil 50 der Blattfeder 36 ist mit einem sich in Längsrichtung der Schraube 12 erstreckenden Kragen 52 versehen, dessen Außendurchmesser nur geringfügig kleiner als der Innendurchmesser der Durchgangsöffnung im Haltebügel 38 ist. Mittels dieses Kragens 52 kann die Blattfeder 36 dadurch zuverlässig relativ zum Haltebügel 38 festgelegt werden.

Die Darstellung der Fig. 6 zeigt einen Bausatz zur Erstellung von Tragwerken mit insgesamt vier erfindungsgemäßen Befestigungsanordnungen 10 in auseinandergezogener Darstellung. Die Befestigungsanordnungen 10 werden in einen Montagewinkel 56 eingesetzt, der zwei C-förmige Halteschienen 58, 62 im rechten Winkel miteinander verbinden soll.

Der Montagewinkel 56 ist hierzu mit Durchgangsöffnungen 60 versehen, die auf die Abmessungen der Haltescheibe 14 der Befestigungsanordnung 10 abgestimmt sind. Speziell können sich die Sicherungsabschnitte 22 der Haltescheibe 14 in die Durchgangsöffnung 60 hinein erstrecken, wohingegen die Klemmabschnitte 24 auf einer Oberseite des Montagewinkels 56 aufliegen. Nach dem Einschieben der Befestigungsanordnung 10 in die Durchgangsöffnung 60 ist somit die Haltescheibe 14 gegen Drehung relativ zum Montagewinkel 56 gesichert. Der Montagewinkel 56 wird dann auf die Oberseite einer der Halteschienen 58, 62 aufgesetzt und die Schraube 12 wird in Richtung der Halteschiene 58 gedrückt, wodurch, wie erläutert wurde, sich die Schiebemutter 16 von der Haltescheibe 14 entfernt. Wenn dann der Kopf der Schraube auf der Oberseite der Haltescheibe 14 aufliegt, befindet sich die Schiebemutter 16 weit genug innerhalb der C-förmigen Halteschiene 58, so dass die Schiebemutter 16 dann relativ zur C-förmigen Halteschiene um 90° verdreht werden kann und deren Hinterschnitte dadurch hintergreift. In diesem Zustand wird eine Weiterdrehung der Schiebemutter verhindert, da die Stirnkanten der Schiebemutter 16 an den Innenwänden der C-förmigen Halteschiene anschlagen. Die Schraube 12 kann dadurch weiter in die Schiebemutter 16 eingeschraubt werden, so dass letztendlich die Schiebemutter 16 gegen die Hinterschnitte der C-förmigen Halteschiene 58 und die Haltescheibe 14 gegen die Oberseite des Montagewinkels 56 gezogen wird. Die Schraube 12 wird dann festgezogen und verbindet dadurch den Haltewinkel 56 zuverlässig mit der C-förmigen Halteschiene 58.

Fig. 7 zeigt den zusammengebauten Zustand des Bausatzes der Fig. 6. Der Montagewinkel verbindet nun die beiden C-förmigen Halteschienen 58, 62 im rechten Winkel miteinander.

## Patentansprüche

1. Befestigungsanordnung für C-förmige Halteschienen mit einer Schraube (12) und einer Schiebemutter (16), wobei ein Gewindeabschnitt der Schraube (12) wenigstens abschnittsweise in eine Gewindebohrung der Schiebemutter (16) eingeschraubt ist, einer zwischen einem Schraubenkopf (20) der Schraube (12) und der Schiebemutter (16) angeordneten Haltescheibe (14) und einem Positionierbauteil (18), wobei das Positionierbauteil (18) einen zwischen der Haltescheibe (14) und der Schiebemutter (16) angeordneten Abstandshalterabschnitt (32) und einen, an einer dem Schraubenkopf (20) abgewandten Unterseite der Schiebemutter (16) angreifenden Vorspannabschnitt (34) aufweist, **dadurch gekennzeichnet, dass** der Abstandshalterabschnitt (32) an seinem, dem Schraubenkopf (20) zugewandten Ende eine Aufnahme für die Haltescheibe (14) aufweist, und dass die Aufnahme zwei Kreisringabschnitte aufweist, die zwischen einem Schaft der Schraube (12) und einer Innenwand einer Durchgangsbohrung der Haltescheibe (14) angeordnet sind.

2. Befestigungsanordnung nach Anspruch 1, **dadurch gekennzeichnet, dass** der Abstandshalterabschnitt (32) und der Vorspannabschnitt (34) mittels zweier Stege (40) miteinander verbunden sind, die an insbesondere gegenüberliegenden Längsseiten der Schiebemutter (16) anliegen.

3. Befestigungsanordnung nach Anspruch 1 oder 2, **dadurch gekennzeichnet, dass** die Aufnahme Mittel (48) aufweist, um die Haltescheibe (14) relativ zu einer Längsrichtung der Schraube (12) zu fixieren, aber eine Drehung der Haltescheibe (14) relativ zum Positionierbauteil (18) zu ermöglichen.

4. Befestigungsanordnung nach wenigstens einem der vorstehenden Ansprüche, **dadurch gekennzeichnet, dass** der Abstandshalterabschnitt (32) zwei Halbschalen aufweist, die einen Schaft der Schraube (12) zwischen sich aufnehmen und voneinander beabstandet sind.

5. Befestigungsanordnung nach Anspruch 4, **dadurch gekennzeichnet, dass** die beiden Halbschalen im Bereich zweier Stege (40) miteinander verbunden sind, die an gegenüberliegenden Längsseiten der Schiebemutter (16) anliegen.

6. Befestigungsanordnung nach Anspruch 5, **dadurch gekennzeichnet, dass** die Stege (40) jeweils einen insbesondere V-förmigen Einschnitt (46) aufweisen, wobei der Einschnitt (46) bis zum Schaft der Schraube (12) durchgeht und sich bis zu dem, dem Schraubenkopf (20) zugewandten Ende des Positionierbauteils (18) fortsetzt.

7. Befestigungsanordnung nach Anspruch 6, **dadurch gekennzeichnet, dass** der Vorspannabschnitt (34) einen Haltebügel (38) aufweist, der die zwei Stege (40) miteinander verbindet.

8. Befestigungsanordnung nach wenigstens einem der vorstehenden Ansprüche 5 bis 7, **dadurch gekennzeichnet, dass** der Vorspannabschnitt (34) wenigstens eine Blattfeder (36) aufweist, die sich einerseits an einem Haltebügel (38) des Positionierbauteils (18), der die zwei Stege (40) miteinander verbindet, die an gegenüberliegenden Längsseiten der Schiebemutter (16) anliegen, und andererseits an einer, dem Schraubenkopf (20) abgewandten Unterseite der Schiebemutter (16) abstützt.

9. Befestigungsanordnung nach Anspruch 8, **dadurch gekennzeichnet, dass** die Blattfeder sich mit zwei freien Enden an einer Unterseite der Schiebemutter (16) und mit einem Mittelteil (48) an einer der Schiebemutter (16) zugewandten Oberseite des Haltebügels abstützt.

10. Befestigungsanordnung nach Anspruch 9, **dadurch gekennzeichnet, dass** der Mittelteil (50) der Blattfeder (36) und die Oberseite des Haltebügels (38) mit zueinander passenden Positioniervorrichtungen versehen sind.

11. Befestigungsanordnung nach wenigstens einem der vorstehenden Ansprüche, **dadurch gekennzeichnet, dass** das Positionierbauteil (18) aus einem Kunststoffmaterial hergestellt ist.

12. Befestigungsanordnung nach wenigstens einem der vorstehenden Ansprüche 8 bis 11, **dadurch gekennzeichnet, dass** die Blattfeder (36) als vom Rest des Positionierbauteils (18) separates Kunststoffteil ausgebildet ist.

13. Befestigungsanordnung nach wenigstens einem der vorstehenden Ansprüche, **dadurch gekennzeichnet, dass** vor Verwendung der Befestigungsanordnung (10) der Gewindeabschnitt der Schraube (12) in die Gewindebohrung der Schiebemutter (16) eingeklebt ist.

14. Bausatz mit wenigstens einer Befestigungsanordnung (10) nach wenigstens einem der vorstehenden Ansprüche, wenigstens einer C-förmigen Halteschiene (58, 62) und wenigstens einem Montagewinkel (56), wobei der Montagewinkel (56) wenigstens eine Durchgangsöffnung (60) aufweist, die auf die Abmessungen der Haltescheibe (14) so abgestimmt ist, dass sich zwei, vom Schraubenkopf (20) weg abgekröpfte Sicherungsabschnitte (22) der Haltescheibe (14) durch die Durchgangsöffnung (60) hindurcherstrecken können und dass zwei Haltevorsprünge (24) der Haltescheibe (14) auf einer, dem Schraubenkopf (20) zugewandten Oberseite des Montagewinkels (56) aufliegen können.

## Claims

1. A fastening arrangement for C-shaped retaining rails with a screw (12) and a sliding nut (16), wherein
a threaded section of the screw (12) in at least some sections is screwed into a threaded bore of the sliding nut (16), with a retaining plate (14) arranged between a screw head (20) of the screw (12) and the sliding nut (16), and a positioning component (18), wherein
the positioning component (18) has a spacer section (32) arranged between the retaining plate (14) and the sliding nut (16), and a pre-stressed section (34) engaging against a lower face of the sliding nut (16) facing away from the screw head (20),
**characterised in that**,
on its end facing towards the screw head (20) the spacer section (32) has a seating for the retaining plate (14
and **in that**,
the seating has two circular ring sections, which are arranged between a shaft of the screw (12) and an inner wall of a passage bore of the retaining plate (14).

2. The fastening arrangement in accordance with claim 1,
**characterised in that**,
the spacer section (32) and the pre-stressed section (34) are connected with one another by means of two webs (40), which fit in particular on opposite longitudinal sides of the sliding nut (16).

3. The fastening arrangement in accordance with claim 1 or 2,
**characterised in that**,
the seating has means (48) in order to fix the retaining plate (14) relative to a longitudinal direction of the screw (12), but to enable a rotation of the retaining plate (14) relative to the positioning component (18).

4. The fastening arrangement in accordance with at least one of the preceding claims,
**characterised in that**,
the spacer section (32) has two half-shells, which accommodate a shaft of the screw (12) between them, and are spaced apart from one another.

5. The fastening arrangement in accordance with claim 4,
**characterised in that**,
the two half-shells are connected with one another in the vicinity of two webs (40), which fit on opposite longitudinal sides of the sliding nut (16).

6. The fastening arrangement in accordance with claim 5,
**characterised in that**,
the webs (40) have in each case an in particular V-shaped incision (46), wherein
the incision (46) passes through up to the shaft of the screw (12) and continues up to the end of the positioning component (18) facing towards the screw head (20).

7. The fastening arrangement in accordance with claim 6,
**characterised in that**,
the pre-stressed section (34) has a holding bracket (38), which connects the two webs (14) with one another.

8. The fastening arrangement in accordance with at least one of the preceding claims 5 to 7,
**characterised in that**,
the pre-stressed section (34) has at least one leaf spring (36) which on the one hand is connected to a holding bracket (38) of the positioning component (18), which connects the two webs (40) with one another, and on the other hand is supported on a lower face of the sliding nut (16) facing away from the screw head (20).

9. The fastening arrangement in accordance with claim 8,
**characterised in that**,
the two free ends of the leaf spring are supported on a lower face of the sliding nut (16) and with a middle part (48) on an upper face of the holding bracket facing towards the sliding nut (16).

10. The fastening arrangement in accordance with claim 9,
**characterised in that**,
the middle part (50) of the leaf spring (36) and the upper side of the holding bracket (38) are provided with positioning devices that are matched to one another.

11. The fastening arrangement in accordance with at least one of the preceding claims,
**characterised in that**,
the positioning component (18) is manufactured from a plastic material.

12. The fastening arrangement in accordance with at least one of the preceding claims 8 to 11,
**characterised in that**,
the leaf spring (36) is designed as a plastic part that is separate from the rest of the positioning component (18).

13. The fastening arrangement in accordance with at least one of the preceding claims,
**characterised in that**,
before the fastening arrangement (10) is used the threaded section of the screw (12) is glued into the threaded bore of the sliding nut (16).

14. A kit with at least one fastening arrangement (10) in accordance with at least one of the preceding claims, at least one C-shaped retaining rail (58, 62), and at least one mounting bracket (56), wherein
the mounting bracket (56) has at least one passage opening (60), which is matched to the dimensions of the retaining plate (14), such that two securing sections (22) of the retaining plate (14), which are bent away from the screw head (20), extend through the passage opening (60), and such that two holding projections (24) of the retaining plate (14) can fit against an upper face of the mounting bracket (56) facing the screw head (20).

## Revendications

1. Agencement de fixation pour des rails de support en forme de C, avec une vis (12) et un écrou coulissant (16), un tronçon fileté de la vis (12) étant vissé au moins en partie dans un taraudage de l'écrou coulissant (16), une rondelle de retenue (14) placée entre la tête de vis (20) de la vis (12) et l'écrou coulissant (16) et un élément de positionnement (18), l'élément de positionnement (18) comportant un tronçon d'écarteur (32) placé entre la rondelle de retenue (14) et l'écrou coulissant (16) et un tronçon de précontrainte (34) s'engageant sur une face inférieure de l'écrou coulissant (16) qui est opposée à la tête de vis (20), **caractérisé en ce que** sur son extrémité qui fait face à la tête de vis (20), le tronçon d'écarteur (32) comporte un logement pour la rondelle de retenue (14) et **en ce que** le logement comporte deux tronçons en anneaux de cercle qui sont placés entre une tige de la vis (12) et une paroi intérieure d'un perçage traversant de la rondelle de retenue (14).

2. Agencement de fixation selon la revendication 1, **caractérisé en ce que** le tronçon d'écarteur (32) et le tronçon de précontrainte (34) sont assemblés l'un à l'autre au moyen de deux barrettes (40) qui sont adjacentes sur des côtés longitudinaux notamment opposés de l'écrou coulissant (16).

3. Agencement de fixation selon la revendication 1 ou la revendication 2, **caractérisé en ce que** le logement comporte des moyens (48) pour fixer la rondelle de retenue (14) par rapport à une direction longitudinale de la vis (12), mais pour permettre une rotation de la rondelle de retenue (14) par rapport à l'élément de positionnement (18).

4. Agencement de fixation selon au moins l'une quelconque des revendications précédentes, **caractérisé en ce que** le tronçon d'écarteur (32) comporte deux demi-coques qui réceptionnent entre elles une tige de la vis (12) et qui sont écartées l'une de l'autre.

5. Agencement de fixation selon la revendication 4, **caractérisé en ce que** les deux demi-coques sont assemblées entre elles dans la zone de deux barrettes (40) qui sont adjacentes à des côtés longitudinaux opposés de l'écrou coulissant (16).

6. Agencement de fixation selon la revendication 5, **caractérisé en ce que** les barrettes (40) comportent chacune une entaille (46), notamment en forme de V, l'entaille (46) étant traversante jusqu'à la tige de la vis (12) et se poursuivant jusqu'à l'extrémité de l'élément de positionnement (18) qui fait face à la tête de vis (20).

7. Agencement de fixation selon la revendication 6, **caractérisé en ce que** le tronçon de précontrainte (34) comporte un étrier de retenue (38) qui assemble l'une avec l'autre les deux barrettes (40).

8. Agencement de fixation selon au moins l'une quelconque des revendications 5 à 7 précédentes, **caractérisé en ce que** le tronçon de précontrainte (34) comporte au moins un ressort à lames (36) qui s'appuie d'une part sur un étrier de retenue (38) de l'élément de positionnement (18) qui assemble l'une avec l'autre les deux barrettes (40) qui sont adjacentes à deux côtés longitudinaux opposés de l'écrou coulissant (16) et d'autre part sur une face inférieure de l'écrou coulissant (16) qui est opposée à la tête de vis (20).

9. Agencement de fixation selon la revendication 8, **caractérisé en ce que** le ressort à lames s'appuie par deux extrémités libres sur une face inférieure de l'écrou coulissant (16) et par une partie centrale (48) sur une face supérieure de l'étrier de retenue qui fait face à l'écrou coulissant (16).

10. Agencement de fixation selon la revendication 9, **caractérisé en ce que** la partie centrale (50) du ressort à lames (36) et la face supérieure de l'étrier de retenue (38) sont munies de dispositifs de retenue qui se correspondent.

11. Agencement de fixation selon au moins l'une quelconque des revendications précédentes, **caractérisé en ce que** l'élément de positionnement (18) est fabriqué en une matière plastique.

12. Agencement de fixation selon au moins l'une quelconque des revendications précédentes, **caractérisé en ce que** le ressort à lames (36) est conçu en tant qu'une pièce en matière plastique séparée du reste de l'élément de positionnement (18).

13. Agencement de fixation selon au moins l'une quelconque des revendications précédentes, **caractérisé en ce qu'**avant l'utilisation de l'agencement de fixation (10) le tronçon fileté de la vis (12) est collé à l'intérieur du taraudage de l'écrou coulissant (16).

14. Kit, avec au moins un agencement de fixation (10) selon au moins l'une quelconque des revendications précédentes, au moins un rail de support (58, 62) en forme de C et au moins une cornière de montage (56), la cornière de montage (56) comportant au moins un orifice traversant (60) qui est accordé avec les dimensions de la rondelle de retenue (14) de telle sorte que deux segments de blocage (22) du disque de retenue (14), coudés en s'éloignant de la tête de vis (20) puissent s'étendre à travers l'orifice traversant (60) et en ce que deux saillies de retenue (24) du disque de retenue (14) peuvent reposer sur une face supérieure de la cornière de montage (56) qui fait face à la tête de vis (20).
